Europäisches Patentamt

European Patent Office

Office européen des brevets

(19)

(11) Publication number: **0 019 959**

**B2**

(12) **NEW EUROPEAN PATENT SPECIFICATION**

(45) Date of publication of the new patent specification: **16.05.90**

(51) Int. Cl.⁵: **C 10 G 47/20, C 10 G 65/12**

(21) Application number: **80200435.8**

(22) Date of filing: **09.05.80**

(54) **Process for the preparation of light hydrocarbon fractions.**

(30) Priority: **25.05.79 NL 7904117**

(43) Date of publication of application:
**10.12.80 Bulletin 80/25**

(45) Publication of the grant of the patent:
**12.10.83 Bulletin 83/41**

(45) Mention of the opposition decision:
**16.05.90 Bulletin 90/20**

(84) Designated Contracting States:
**BE DE FR GB IT**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Bode, Dirk**
**Badhuisweg 3**
**NL-1031 CM Amsterdam (NL)**
Inventor: **Janssen, Martinus Maria Petrus**
**Badhuisweg 3**
**NL-1031 CM Amsterdam (NL)**

(74) Representative: **Aalbers, Onno et al**
**P.O. Box 302**
**NL-2501 CH The Hague (NL)**

(56) References cited:
DE-B-1 256 824
US-A-3 392 108
US-A-3 393 148
US-A-3 394 074
US-A-3 549 518
US-A-3 622 501
US-A-3 867 277
US-A-3 959 180

(56) References cited:
"Zeolite molecular sieves, structure, chemistry, and use" von D.W. Breck, John Wiley and Sons, New York, 1974, Pages 144, 155

J.R. Katzer und R. Sivasubramanian, Catal. Rev.-Sci. Eng. 20 (2), P. 173 (1979)

N. Choudhary und D.N. Saraf in Ind. Eng. Chem. Prod. Res. Dev., Vol. 14, No.2 (1975), Page 77.

EP 0 019 959 B2

## Description

The invention relates to a process for the preparation of light hydrocarbon fractions by hydrocracking a heavy hydrocarbon oil.

Hydrocracking of heavy hydrocarbon oils for the preparation of light hydrocarbon fractions such as gasoline, kerosine and gasoil fractions is applied on a large scale in the oil industry. Hydrocracking is carried out by contacting the feed, together with hydrogen, at elevated temperature and pressure with a catalyst which contains one or more metals with hydrogenating activity which have been deposited on a carrier with cracking activity. As metals with hydrogenating activity are used, inter alia, platinum, palladium and combinations of nickel or cobalt with molybdenum or tungsten (see US—A—3 662 501). As carriers with cracking activity amorphous materials such as alumina and silica-alumina and crystalline materials such as faujasite are used (see US—A—3 549 518).

A drawback of catalytic hydrocracking is that, as a rule, it should be carried out at a relatively high hydrogen partial pressure, in order to avoid rapid catalyst deactivation. Moreover, the required hydrogen partial pressure will be higher according as the feed to be hydrocracked is heavier. In general, it may be said that in the catalytic hydrocracking of heavy hydrocarbon oils of which 50%v boils above 350°C and more than 10%v above 450°C, a requirement for reaching a catalyst life which makes the process acceptable for commercial use is that hydrogen partial pressures should be above 100 bar. The use of these high hydrogen partial pressures requires expensive equipment and involves a high hydrogen consumption. In view of the ample availability of the above-mentioned type of heavy hydrocarbon oils and the increasing demand for light hydrocarbon fractions, there is a need for a process for the catalytic hydrocracking of these oils at low pressure.

The Applicant has carried out an investigation concerning this subject. From the above-mentioned metals with hydrogenating activity and carrier materials with cracking activity were selected combinations of nickel and tungsten and carriers which consist of more than 50%w faujasite, as it was found that catalysts built up of these components show a high activity and selectivity in the hydrocracking of the above-mentioned heavy feeds, also at hydrogen partial pressures below 100 bar. It was found in this investigation that, when hydrocracking the said heavy feeds at hydrogen partial pressures below 100 bar, the stability of these catalysts greatly depends on their porosity and particle size and that the requirements that have to be made with respect to the porosity and particle size in view of the stability are dependent on the hydrogen partial pressure used.

It was found that in the hydrocracking of the said heavy hydrocarbon oils using the said catalysts at hydrogen partial pressures below 100 bar, a catalyst stability which is acceptable for commercial use of the process can be reached, if the catalyst has a specific average particle diameter (d) and an specific average pore diameter (p) such that the following relation is satisfied:

$$\frac{(p)^{1.75}}{d} < 0.73 \times (P_{H_2})^{2.5}.$$

wherein $P_{H_2}$ represents the hydrogen partial pressure used (p in nm, d in mm, $P_{H_2}$ in bar), whereby the d-value is between 0.5 and 25 mm and the p-value is between 10 and 1000 nm. The above-mentioned values of d and p have been defined as follows on the basis of their method of determination.

The way in which d is determined depends on the form of the catalyst particles. When this form is such that the particle diameter distribution of the catalyst can be determined with the aid of sieve analysis, d is determined as follows. After a complete sieve analysis of a representative catalyst sample using the set of standard sieves described in the 1969 Book of ASTM Standards, part 30, pp. 96—101 (ASTM Designation: E11—61) has been carried out, d is read from a graph in which for each successive sieve fraction the percentage by weight, calculated on the overall weight of the catalyst sample, has been plotted cumulatively as a function of the linear average particle diameter of the sieve fraction concerned; d is the particle diameter corresponding with 50% of the overall weight. This method can be used for the d-termination of spherical and granular materials and of materials of a similar shape, such as extrudates and pellets with a length/diameter ratio between 0.9 and 1.1. The d-determination of extrudates and pellets with a length/diameter ratio which is smaller than 0.9 or larger than 1.1, and of similar cylindrical materials, whose particle diameter cannot be determined by sieve analysis, is carried out as follows. After a complete length distribution analysis (in case the length/diameter ratio is smaller than 0.9) or after a complete diameter distribution analysis (in case the length/diameter ratio is greater than 1.1) of a representative catalyst sample has been carried out, d is read from a graph in which for each successive length or diameter fraction the percentage by weight, calculated on the overall weight of the catalyst sample, has been plotted cumulatively as a function of the linear average size of the fraction concerned; d is the value which corresponds with 50% of the overall weight.

After the pore diameter distribution of a catalyst sample has been determined, p is read from a graph in which, for the pore diameter range of 10—15000 nm, for each successive increase in pore volume which is present in pores with an equal diameter interval smaller than or equal to 2 nm, and which increases in pore

2

volume is smaller than or equal to 10% of the pore volume present in pores with a diameter of 10—15000 nm, the quotient of the increase in pore volume and the corresponding pore diameter interval has been plotted cumulatively as a function of the linear average pore diameter over the relevant pore diameter interval; p is the pore diameter corresponding with 50% of the overall quotient at 15000 nm. The determination of the pore diameter distribution of the catalyst is carried out by means of the mercury penetration method as described by H. L. Ritter and L. C. Drake in Industrial and Engineering Chemistry, Analytical Edition 17, 787 (1945), using mercury pressures of 1—1500 bar. The pore diameter distribution of the catalyst in the pore diameter range above 10 nm is calculated by means of the formula:

$$\text{pore diameter (in nm)} = \frac{15000}{\text{mercury pressure, absolute (in bar)}}$$

The present patent application therefore relates to a process for the preparation of light hydrocarbon fractions by hydrocracking a heavy hydrocarbon oil, in which a heavy hydrocarbon oil of which more than 50%v boils above 350°C and more than 10%v above 450°C is contacted, together with hydrogen, at elevated temperature and a hydrogen partial pressure below 100 bar with a catalyst which contains the metal combination nickel-tungsten deposited on a carrier comprising more than 50%w faujasite, which catalyst has a specific average particle diameter (d) and specific average pore diameter (p) such that the following relation is satisfied:

$$\frac{(p)^{1.75}}{d} < 0.73 \times (P_{H_2})^{2.5},$$

wherein $P_{H_2}$ is the hydrogen partial pressure used (p in nm, d in mm, $P_{H_2}$ in bar).

The catalysts that can be used according to the invention are characterized by a certain relation between their p and d at a given $P_{H_2}$. It is important that p and d, which are used for characterizing the catalysts, are determined in accordance with the methods described above, because when for characterizing the catalysts use is made of an average pore diameter or an average particle diameter which has been determined by methods other than those mentioned above (e.g. an average pore diameter calculated as 4×the quotient of the pore volume and the surface or an average particle diameter calculated as the linear average), different results may be obtained.

The relation found between p, d and $P_{H_2}$ can be used for three different purposes. In the first place, the relation provides the opportunity to find out whether it is indeed possible to reach an acceptable stability with a catalyst which has a given p and d, when carrying out the process at a $P_{H_2}$ below 100 bar, and if so, above what value $P_{H_2}$ should at any rate be chosen in order to achieve this. Further, the relation may be used to determine the value above which d of a catalyst material with a given p should be chosen in order to obtain an acceptable stability at a given $P_{H_2}$ below 100 bar. Finally, the relation provides the opportunity to determine the value below which p of a catalyst material with a given d should be chosen in order to obtain an acceptable stability at a given $P_{H_2}$ below 100 bar.

Although, when using the relation between p, d and $P_{H_2}$ according to the invention it will always be possible to indicate for a catalyst material with a given p a minimum value for d above which an acceptable stability can be reached at a $P_{H_2}$ below 100 par, the choice of d is partly determined by the activity and selectivity of the catalyst. In the process according to the invention a catalyst material with a d-value between 0.5 and 25 mm is used, because it has been found that catalysts of the present type as a rule have too low an activity and selectivity for hydrocracking the said heavy hydrocarbon oils, if they have a d-value which is smaller than 0.5 mm or larger than 25 mm. In the process according to the invention it is preferred to use a catalyst with a d-value between 1 and 5 mm. As with the choice of d, the choice of p is partly determined by the activity and selectivity of the catalyst. By using the relation between p, d and $P_{H_2}$ according to the invention it is always possible to find for a catalyst material with a given d a p-value below which an acceptable stability can be reached at $P_{H_2}$ below 100 bar. In view of the required activity of the catalyst in the process according to the invention no catalysts with a p-value below 10 nm are used and in view of the required selectivity of the catalyst no catalysts with a p-value above 1000 nm are used. In the process according to the invention it is preferred to use a catalyst with a p-value between 50 and 200 nm.

In the process according to the invention a catalyst should be used which contains the metal combination nickel-tungsten, deposited on a carrier which consists of more than 50%w, faujasite. As regards the metal load preference is given to catalysts which contain 0.1 to 25 pbw nickel and 1 to 50 pbw tungsten per 100 pbw carrier. Particular preference is given to the use of catalysts which contain 0.5 to 5 pbw nickel and 5 to 25 pbw tungsten per 100 pbw carrier. As regards the carrier preference is given to carriers which consist of more than 60%w faujasite and in particular of from 70 to 80%w faujasite and the rest of inert binder material. A very suitable binder material of the present catalyst is alumina.

The catalysts according to the invention are preferably used in the sulphidic form. Sulphiding may be carried out by one of the known techniques for sulphidation of catalysts such as contacting the catalysts

3

with a sulphur-containing gas, for instance a mixture of hydrogen and hydrogen sulphide, or contacting the catalyst with hydrogen and sulphur-containing hydrocarbon oil, for instance gas oil. In addition to the metals nickel and tungsten the catalysts may also contain promoters such as phosphorus, boron and halogen, in particular fluorine.

The preparation of light hydrocarbon fractions by hydrocracking according to the invention can very suitably be carried out at a temperature of from 250 to 450°C and a space velocity of from 0.2 to 5.0 l feed per l catalyst per hour. The preferred conditions are: a temperature of from 300 to 425°C and a space velocity of from 0.5 to 3.0 l feed per l catalyst per hour. The process according to the invention is carried out at a $P_{H_2}$ which is at any rate below 100 bar. In respect of the choice of $P_{H_2}$ at which the process will be carried out the following remarks should be made. If it is found that, when using the relation according to the invention, for a catalyst material with given p and d-values a $P_{H_2}$-value below 100 bar is obtained above which with the catalyst material concerned an acceptable stability can be reached, the process according to the invention will preferably be carried out at a $P_{H_2}$ as low as possible. Naturally, the $P_{H_2}$ used will have to lie above the $P_{H_2}$ which follows from the relation. There are no restrictions here in the choice of the $P_{H_2}$ in connection with activity or selectivity as was the case with the choice of p and d. However, care should be taken to ensure that there is sufficient hydrogen in the reactor in view of the hydrogen consumption of the occurring hydrocracking reactions.

In the process according to the invention the starting material is a heavy hydrocarbon oil of which more than 50%v boils above 350°C and more than 10%v above 450°C. The preferred starting materials are heavy hydrocarbon oils of which more than 60%v boils above 350°C and more than 15%v above 450°C, and in particular heavy hydrocarbon oils of which more than 70%v boils above 350°C and more than 20%v above 450°C. Very suitable feeds for the present process are distillates obtained in the vacuum distillation of atmospheric distillation residues of crude oils, oils obtained in the deasphalting of vacuum residues of crude oils and mixtures of the said vacuum distillates and deasphalted oils. The hydrocracking according to the invention is preferably applied to heavy hydrocarbon oils which contain less than 100 ppmw organically bound nitrogen. Particular preference is given to heavy hydrocarbon oils which contain less than 10 ppmw organically bound nitrogen. Heavy hydrocarbon oils with a high content of organically bound nitrogen are preferably subjected to a catalytic hydrodenitrogenation before being used as the feed for the process according to the invention. A very suitable catalyst for hydrodenitrogenizing the present heavy hydrocarbon oils is a catalyst containing the metal combination nickel-molybdenum on alumina as the carrier. When using a catalytic hydrodenitrogenation previous to the catalytic hydrocracking according to the invention, it is preferred to use the complete reaction product from the hydrodenitrogenation (without ammonia, hydrogen sulphide or other volatile components being separated from it) as the feed for the hydrocracking.

The catalytic hydrocracking according to the invention may be performed in the vapour phase, in the liquid phase or partly in the vapour phase and partly in the liquid phase. It is preferred to use a fixed catalyst bed. A very suitable embodiment is one in which the feed to be converted, which is partly in the liquid phase and partly in the gas phase, is conducted over a fixed catalyst bed, the "trickle phase" method.

The invention will now be explained with reference to the following example.

## Example

Five catalysts (A—E) were prepared by impregnating carrier materials which consist of 75%w faujasite and 25%w alumina with aqueous solutions, which contain either a nickel and a tungsten salt or a platinum salt, followed by drying and calcining of the composites.

The compositions of the catalysts and their p and d-values, determined according to the method described earlier, are given in Table A. This table also gives for each catalyst the value of

$$x = \frac{(p)^{1.75}}{d}$$

### TABLE A

| Cat. No. | Metal load in pbw per 100 pbw carrier | p, nm | d, mm | $x = \dfrac{(p)^{1.75}}{d}$ |
|---|---|---|---|---|
| A | 3Ni/9.5W | 240 | 1.5 | 9756 |
| B | 3Ni/9.5W | 470 | 2.2 | 21565 |
| C | 3Ni/9.5W | 240 | 0.6 | 24390 |
| D | 0.5Pt | 240 | 1.5 | 9756 |
| E | 0.5Pt | 240 | 0.6 | 24390 |

Catalysts A—E were used for hydrocracking two feeds (I and II).

Feed I was a distillate obtained in the vacuum distillation of an atmospheric distillation residue of a crude oil from the Middle East. Feed I had a content of organically bound nitrogen of 630 ppmw and a sulphur content of 2.65%w. Feed I had an initial boiling point of 250°C; 80%v of it boiled above 350°C and 30%v above 450°C.

Feed II was a distillate obtained in the atmospheric distillation of a crude oil from the Middle East. Feed II had a content of organically bound nitrogen of 200 ppmw and a sulphur content of 2.04%w. Feed II had a final boiling point of 373°C and 28% of it boiled above 350°C.

The experiments were carried out in a standard test, in which the feed — in the presence of hydrogen — was conducted successively through two reactors, each reactor containing a fixed catalyst bed in which the complete reaction product from the first reactor was used as the feed for the second reactor. In the first reactor a $Ni/Mo/Al_2O_3$ denitrogenation catalyst was present which contained per 100 pbw alumina carrier 4 pbw nickel and 11 pbw molybdenum. The second reactor contained the cracking catalyst to be tested. All the catalysts were used in the sulphided form. Sulphidation of the catalysts was performed by contacting them for 6 hours at a temperature of 375°C and an overall pressure of 10 bar with a mixture of hydrogen and hydrogen sulphide with an $H_2/H_2S$ volume ratio of 7:1.

The conditions under which the experiments were carried out were as follows. The denitrogenation step was carried out at a temperature of 375°C, a space velocity of 1 l oil/l catalyst/h, an $H_2/oil$ ratio of 1500 Nl $H_2/kg$ oil and a $P_{H_2}$ equal to the one used in the hydrocracking step of the experiment concerned. The hydrocracking step was carried out at a temperature of 365°C, a space velocity of 1 l/oil/l catalyst/h, an $H_2/oil$ ratio of 1500 Nl $H_2/kg$ oil and a $P_{H_2}$ varying between 35 and 60 bar.

Under the conditions of the standard test the stability of a cracking catalyst is considered acceptable only if after 300 hours the yield of 180°C-minus product calculated on the feed is at least 60%w for feed I and at least 80%w for feed II.

The results of the experiments are shown in Table B. This table also gives for each experiment the value of $y=0.73\times(P_{H_2})^{2.5}$.

### TABLE B

| Exp. No. | Cat. No. | Feed No. | $P_{H_2}$, bar | $y=0.73\times(P_{H_2})^{2.5}$ | Yield of 180°C⁻ product after 300h, %w |
|---|---|---|---|---|---|
| 1 | A | I | 60 | 20356 | 75 |
| 2 | B | I | 60 | 20356 | 56 |
| 3 | C | I | 60 | 20356 | 54 |
| 4 | A | I | 35 | 5290 | 18 |
| 5 | A | II | 60 | 20356 | 96 |
| 6 | C | II | 60 | 20356 | 95 |
| 7 | D | I | 60 | 20356 | 36 |
| 8 | E | I | 60 | 20356 | 34 |

Of the experiments in Table B only no. 1 is an experiment according to the invention. In this experiment, for the hydrocracking of a heavy feed using a Ni/W catalyst with given p and d the value of $P_{H_2}$ was chosen such that the relation x<y was satisfied. In this experiment the stability requirement found to be amply met by the catalyst. Experiments 2—8 are outside the scope of the invention and have been incuded for comparison. In experiments 2—4, for the hydrocracking of a heavy feed using Ni/W catalysts with given p and d the value of $P_{H_2}$ was chosen such that the relation x<y was not satisfied. In these experiments the catalysts were found not to satisfy the stability requirement. In experiments 5 and 6, for the hydrocracking of a light feed using Ni/W catalysts with given p and d the value of $P_{H_2}$ was chosen such that the relation x<y was satisfied in experiment 5 and not in experiment 6. Nevertheless, in both experiments the stability requirement was found to be amply met by the catalysts. In experiments 7 and 8, for the hydrocracking of a heavy feed using Pt catalysts with given p and d the value of $P_{H_2}$ was chosen such that the relation x<y was satisfied in experiment 7 and not in experiment 8. Nevertheless, in both experiments the catalysts were found not to meet the stability requirement.

The results of experiments 5—8 clearly demonstrate the specific character of the relation found between p, d and $P_{H_2}$, both as regards the nature of the metals present on the carrier and as regards the heaviness of the feed to be cracked.

**Claims**

1. A process for the preparation of light hydrocarbon fractions by hydrocracking a heavy hydrocarbon oil, whereby a heavy hydrocarbon oil of which more than 50%v boils above 350°C and more than 10%v above 450°C is contacted, together with hydrogen, at elevated temperature and a hydrogen partial pressure below 100 bar with a catalyst which contains the metal combination nickel-tungsten deposited on a carrier which comprises at least 50%w faujasite, characterised in that the catalyst has a specific average particle diameter (d) and specific average pore diameter (p) such that the following relation is satisfied:

$$\frac{(p)^{1.75}}{d} < 0.73 \times (P_{H_2})^{2.5},$$

wherein $P_{H_2}$ is the hydrogen partial pressure used (p in nm, d in mm, $P_{H_2}$ in bar), and further in that the catalyst has a d-value between 0.5 and 25 mm and a p-value between 10 and 1000 nm.

2. A process according to claim 1, characterized in that the catalyst contains 0.1 to 25 pbw nickel and 1 to 50 pbw tungsten per 100 pbw carrier.

3. A process according to any one of claims 1—2, characterized in that the catalyst carrier consists of more than 60%w faujasite and the rest of inert binder material.

4. A process according to any one of claims 1—3, characterized in that the catalyst carrier contains alumina as inert binder material.

5. A process according to any one of claims 1—4, characterized in that the catalyst is used in the sulphidic form.

6. A process according to any one of claims 1—5, characterized in that it is carried out at a temperature of from 250 to 450°C and a space velocity of from 0.2 to 5.0 l feed per l catalyst per hour.

7. A process according to any one of claims 1—6, characterized in that the heavy hydrocarbon oil contains less than 100 ppmw organically bound nitrogen.

8. A process according to claim 7, characterized in that the heavy hydrocarbon oil is subjected to a catalytic hydrodenitrogenation before being hydrocracked.

9. A process according to claim 8, characterized in that the complete reaction product from the hydrodenitrogenation is used as the feed for the hydrocracking.

**Patentansprüche**

1. Ein Verfahren zur Herstellung von leichten Kohlenwasserstofffraktionen durch Hydrocracken eines schweren Kohlenwasserstofföls, wobei ein schweres Kohlenwasserstofföl, von dem mehr als 50 Volumenprozent oberhalb 350°C und mehr als 10 Volumenprozent oberhalb 450°C sieden, zusammen mit Wasserstoff bei erhöhter Temperatur und einem Wasserstoffpartialdruck unterhalb 100 bar mit einem Katalysator kontaktiert wird, welcher die Metallkombination Nickel-Wolfram aufgebracht auf ein Trägermaterial, welches mindestens 50 Gewichtsprozent Faujasit aufweist, enthält, dadurch gekennzeichnet, daß der Katalysator einen spezifischen mittleren Teilchendurchmesser (d) und einen spezifischen mittleren Porendurchmesser (p) derart hat, daß die folgende Beziehung befriedigt wird:

$$\frac{(p)^{1,75}}{d} < 0,73 \times (P_{H_2})^{2,5}$$

in welcher $P_{H_2}$ der verwendete Wasserstoffpartialdruck ist (p in nm, d in mm, $P_{H_2}$ in bar) un weiter dadurch gekennzeichnet, daß der Katalysator einen d-Wert zwischen 0,5 und 25 mm und einen p-Wert zwischen 10 und 1000 nm hat.

2. Ein Verfahren gemäß Anspruch 1, dadurch gekennzeichnet, daß der Katalysator 0,1 bis 25 Gewichtsteile Nickel und 1 bis 50 Gewichtsteile Wolfram je 100 Gewichtsteilträgermaterial enthält.

3. Ein Verfahren nach irgendeinem der Ansprüche 1 bis 2, dadurch gekennzeichnet, daß der Katalysatorträger zu mehr als 60 Gewichtsprozent aus Faujasit besteht und der Rest ein inertes Bindemittelmaterial ist.

4. Ein Verfahren nach irgendeinem der Ansprüche 1 bis 3, dadurch gekennzeichnet, daß der Katalysatorträger Aluminium-oxid als inertes Bindemittelmaterial enthält.

5. Ein Verfahren gemäß irgendeinem der Ansprüche 1 bis 4, dadurch gekennzeichnet, daß der Katalysator in der sulfidischen Form verwendet wird.

6. Ein Verfahren nach irgendeinem der Ansprüche 1 bis 5, dadurch gekennzeichnet, daß es bei einer Temperatur von 250 bis 450°C und einer Raumgeschwindigkeit von 0,2 bis 5,0 l Zuspeisung je Liter Katalysator je Stunde durchgeführt wird.

7. Ein Verfahren nach irgendeinem der Ansprüche 1 bis 6, dadurch gekennzeichnet, daß das schwere Kohlenwasserstofföl weniger als 100 Gewichtsteile je Million an organisch gebundenem Stickstoff enthält.

8. Ein Verfahren nach Anspruch 7, dadurch gekennzeichnet, daß das schwere Kohlenwasserstofföl einer katalytischen Hydrodenitrierung unterworfen wird, bevor es hydrogecrackt wird.

9. Ein Verfahren gemäß Anspruch 8, dadurch gekennzeichnet, daß das aus der Hydrodenitrierung stammende vollständige Reaktionsprodukt als Zuspeisung für die Hydrocrackung verwendet wird.

# EP 0 019 959 B2

**Revendications**

1. Un procédé pour la préparation de fractions légères d'hydrocarbures par hydrocraquage d'une huile lourde d'hydrocarbures, selon lequel une huile lourde d'hydrocarbures dont une proportion de plus de 50% en volume bout au-dessus de 350°C et une proportion de plus de 10% en volume bout au-dessus de 450°C est mise en contact, en même temps que de l'hydrogène, à température élevée et sous une pression partielle d'hydrogène inférieure à 100 bars, avec un catalyseur qui contient la combinaison de métaux nickel-tungstène déposée sur un support qui comprend au moins 50% en poids de faujasite, caractérisé en ce que le catalyseur a un diamètre moyen spécifique des particules (d) et un diamètre moyen spécifique des pores (p) tels que la relation suivante soit satisfaite:

$$\frac{(p)^{1,75}}{d} \ < \ 0,73 \ x \ (P_{H_2})^{2,5}$$

où $P_{H_2}$ est la pression partielle d'hydrogène utilisée (p en nm, d en mm, $P_{H_2}$ en bars) et de plus caractérisé en ce que le catalyseur a une valeur de d comprise entre 0,5 et 25 mm et une valeur de p comprise entre 10 et 1000 nm.

2. Un procédé selon la revendication 1 caractérisé en ce que le catalyseur contient de 0,1 à 25 parties en poids de nickel et de 1 à 50 parties en poids de tungstène pour 100 parties en poids de support.

3. Un procédé selon l'une quelconque des revendications 1 à 2, caractérisé en ce que le support du catalyseur est constitué de plus de 60% en poids de faujasite, le complément étant de la matière inerte de liage.

4. Un procédé selon l'une quelconque des revendications 1 à 3, caractérisé en ce que le support du catalyseur contient de l'alumine comme matière inerte de liage.

5. Procédé selon l'une quelconque des revendications 1 à 4, caractérisé en ce que le catalyseur est utilisé dans la forme sulfurée.

6. Un procédé selon l'une quelconque des revendications 1 à 5, caractérisé en ce qu'il est mis en oeuvre à une température comprise entre 250 et 450°C et à une vitesse spatiale comprise entre 0,2 et 5,0 litres de charge par litre de catalyseur et par heure.

7. Un procédé selon l'une quelconque des revendications 1 à 6, caractérisé en ce que l'huile lourde d'hydrocarbures contient moins de 100 parties en poids d'azote lié organiquement.

8. Un procédé selon la revendication 7, caractérisé en ce que l'huile lourde d'hydrocarbures est soumise à une hydrodésazotation catalytique avant d'être hydrocraquée.

9. Un procédé selon la revendication 8, caractérisé en ce que le produit de réaction complet de l'hydrodésazotation est utilisé comme charge pour l'hydrocraquage.